# EUROPEAN PATENT APPLICATION

(11) **EP 2 086 240 A1**
(43) Date of publication of application: **05.08.2009**
(21) Application number: 07785125.1
(22) Date of filing: 13.07.2007
(51) Int. Cl.: H04N 7/50

(54) **A METHOD AND A SYSTEM FOR SUPPORTING MEDIA DATA OF VARIOUS CODING FORMATS**

(30) Priority: 21.11.2006 CN 200610144817
(71) Applicant: Huawei Technologies Co., Ltd., Shenzhen, Guangdong Province 518129 (CN)
(72) Inventor: YANG, Bailiang, Shenzhen Guangdong 518-129 (CN); SHANG, Zhihao, Shenzhen Guangdong 518-129 (CN); HUANG, Hui, Shenzhen Guangdong 518-129 (CN)
(74) Representative: Thun, Clemens
(86) International application number: PCT/CN2007/002148
(87) International publication number: WO 2008/061416

(57) **Abstract**

A method for supporting media data of various coding formats includes: a streaming server converting the received media files of different coding formats into media files of a particular file format, where the media files of a particular file format include media data information and index information; the stream server determining the corresponding media file according to an operational command from a client, and sending the media data information in the corresponding media file to the client according to the index information in the corresponding media file. The present invention may solve a problem in the conventional art that media files of different coding formats have to be stored on different streaming servers, which increases the cost of the system and the integration difficulty of the system and cannot realize load balance among the different streaming servers.

## Description

### Field of the Invention

The present invention relates to streaming media technologies, and in particular, to a method and system for supporting media data of various coding formats.

### Background of the Invention

Along with the development of the third generation mobile communication technologies and broadband networks, the network communication capability is continuously improved, which dramatically increases the traffic and types of services, and enriches people's life to a great extent. One improvement is that multimedia data such as the video and audio data of a program is stored in a network server after compressed using a streaming media technology, so that users may watch or listen to the program while downloading the program by accessing the network server, without having to wait until the whole multimedia file of the program is downloaded. The streaming media technology can provide a high-quality audio and video effect in real time in a low bandwidth environment. The application scope of the streaming media service is very broad, and many application services need to be supported by the streaming media technology. The streaming media service has become a mainstream service of the third generation mobile communication technologies and broadband networks.

The streaming media data is compressed using data coding technologies, so that transmission traffic is decreased and that the load pressure of the transport network is reduced, without any impact on the visual effect of people. Currently, there are many data coding technologies, such as the MPEG-2/MPEG-4 standard of ISO/IEC, the H.263/H.264 standard of ITU-T, and the AVS standard of China.

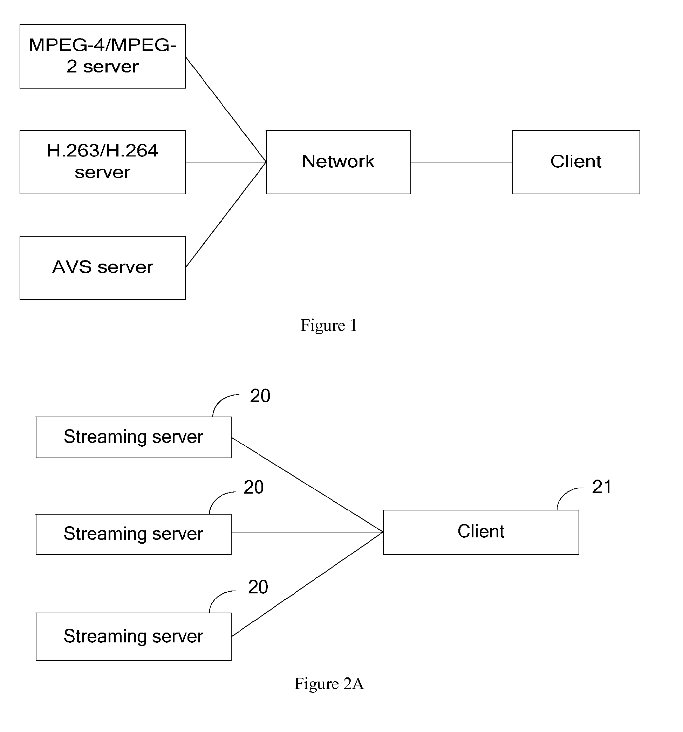

In the conventional art, to support multiple coding standards in a streaming media system, different streaming servers are adopted to carry the streaming media data encoded by different coding standards. As shown in Figure 1, an MPEG-2//MPEG-4 streaming server, an H.263/H.264 streaming server and an AVS streaming server are adopted to respectively carry the streaming media data encoded by the MPEG-2/MPEG-4 standard, H.263/H.264 standard and AVS standard. After a client sends a media playing request, the streaming server that stores the media data of the program demanded by the client performs Real-Time Transport Protocol (RTP) encapsulation to the media files and sends the encapsulated media files to the client according to the client's request.

In the conventional art, different streaming servers cannot share the streaming media data encoded by different coding standards. Each streaming server can only play the media data of the coding format supported by the streaming server itself. Even if there are few clients, multiple servers are needed to provide services for the clients, which increases the cost of the system; meanwhile, if the system needs to support new coding formats, new servers need to be added, which not only further increases the cost of the system, but also increases the integration difficulty of the system. Moreover, because different streaming servers carry the streaming media data of different coding formats, at a particular time, the load on a streaming server may be relatively low, while the load on another streaming server may be very heavy, so the load balance among the streaming servers cannot be realized.

### Summary of the Invention

The present invention provides a method, communication system and streaming server for supporting media data of multiple coding formats.

A method for supporting media data of multiple coding formats includes:

by a streaming server, converting received media files of different coding formats into media files of a particular file format, where the media files of a particular file format include media data information and index information; and

by the streaming server, determining a corresponding media file according to an operational command from a client, and sending corresponding media data information in the corresponding media file to the client according to the index information in the corresponding media file.

A streaming server includes:

a receiving unit, adapted to receive media files of different coding formats and an operational command which is from a client;

a converting unit, adapted to convert the media files of different coding formats into media files of a particular file format pre-encapsulated with RTP, where the media files of a particular file format include media data information and index information;

a storing unit, adapted to store the media files of a particular file format;

a processing unit, adapted to determine a corresponding media file according to an operational command from a client, determine a corresponding video key frame according to the index information in the corresponding media file, set the start position of the video key frame in the corresponding media file, and read the media data information starting from the start position; and

a sending unit, adapted to return the corresponding media data information to the client.

A communication system includes:

a client, adapted to send an operational command to a streaming server, and receive media data information returned from the streaming server; and

the streaming server, adapted to convert received media files of different coding formats into media files of a particular file format, where the media files of a particular file format include the media data information and index information, determine a corresponding media file according to the operational command from the client, determine and send corresponding media data information in the corresponding media file to the client according to the index information in the corresponding media file.

According to the present invention, the media files of different coding formats are converted into the media files of a particular file format pre-encapsulated with RTP, so that a streaming server is able to provide corresponding system services for media files of various coding formats, which reduces the cost of the system and the integration difficulty of the system to some extent, and realizes the load balance of the system. In another aspect, the RTP pre-encapsulation of the media files in the present invention shortens the time of information processing by the streaming server to some extent, and improves the user experience.

### Brief Description of the Drawings

Figure 1 is an architecture diagram illustrating a streaming media service system in accordance with the conventional art;

Figure 2A is an architecture diagram illustrating a streaming media service system in accordance with an embodiment of the present invention;

Figure 2B is a diagram illustrating the functional structure of a streaming server in accordance with an embodiment of the present invention;

Figure 3 is a flowchart illustrating the process of a streaming server converting the media files of different coding formats into the media files of a particular file format in accordance with an embodiment of the present invention; and

Figure 4 is an architecture diagram illustrating the PES packet structure in accordance with an embodiment of the present invention.

### Detailed Description of the Invention

To solve the problem that in the conventional art, one streaming server can only provide the corresponding system service for the media files of one format, which easily increases the system cost and causes system load imbalance, an embodiment of the present invention provides a method in which a streaming server converts the received media files of different coding formats (such as the media files compressed according to standards of MPEG-2, MPEG-4, H.263, H.264 and AVS respectively) into the media files of a particular file format. The converting process includes that: the streaming server first parses a media file and determines the corresponding coding format of the media file according to the source file of the media file; then the streaming server obtains a corresponding video frame, a corresponding audio frame and a corresponding index parameter according to the coding format of the media file, and performs RTP pre-encapsulation to the video frame and audio frame to generate corresponding media data information, where the video frame includes a video key frame and a video predicted frame; in another aspect, the streaming server generates index information for locating the video key frame according to the index parameters of the media file; and a video predicted frame and an audio frame are set between two adjacent video key frames in the media data information.

Thus, the streaming server converts the media files of different coding formats into the media files of a particular file format pre-encapsulated with RTP, where the media files of a particular file format include media data information and index information. According to different designs of file systems, the media data information and the index information may be stored in one file, or in two different files.

The embodiment of the present invention is hereinafter described in detail accompanying drawings.

As shown in Figure 2A, in this embodiment, the streaming media service system includes a streaming server 20 and a client 21. The streaming server 20 is adapted to convert the received media files of different coding formats into the media files of a particular file format pre-encapsulated with RTP, and return corresponding media data information to the client according to an operational command sent by the client and corresponding index information; and the clients 21 is adapted to send the operational command to the streaming server 20, and receive the corresponding media data information returned from the streaming server 20.

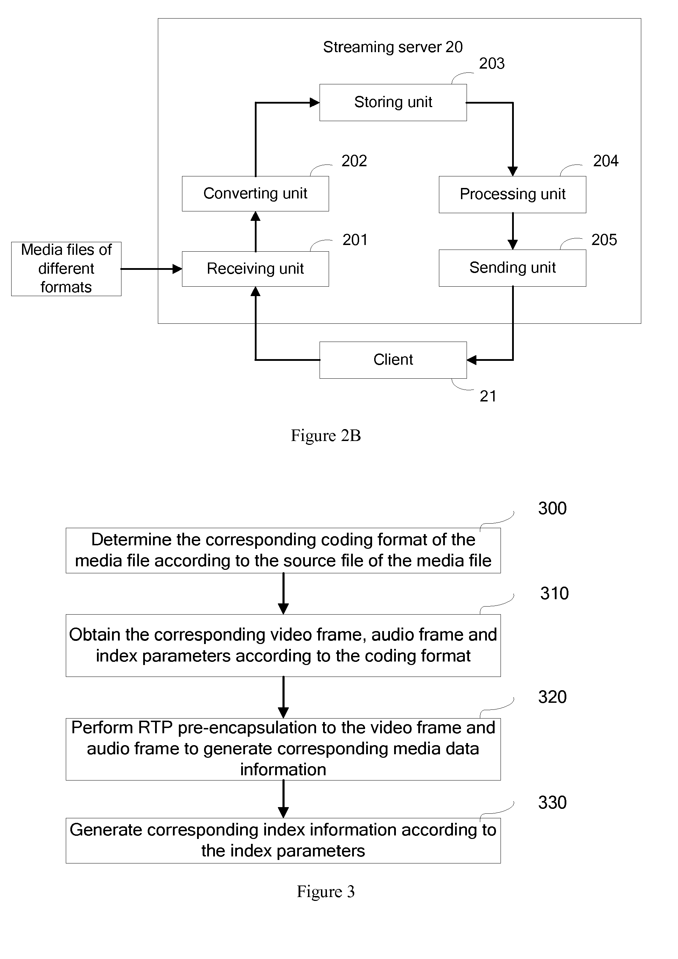

As shown in Figure 2B, the streaming server 20 includes a receiving unit 201, a converting unit 202, a storing unit 203, a processing unit 204 and a sending unit 205. The receiving unit 201 is adapted to receive the media files of different coding formats and the operational command which is from the client 21; the converting unit 202 is adapted to parse a media file, determine the coding format of the media file, obtain corresponding a video frame, an audio frame and index parameters of the media file according to the coding format, perform RTP pre-encapsulation to the video frame and the audio frame of the media file, generate corresponding media data information, and generate the index information for locating the video key frame according to the index parameters of the media file; the storing unit 203 is adapted to store the media files of a particular file format; the processing unit 204 is adapted to determine the start position of the video key frame in the media file according to the operational command sent by the client 21 and the corresponding index information, and read the media data information starting from the start position; and the sending unit 205 is adapted to return the corresponding media data information to the client 21.

In this embodiment, the media data information includes all the stream data which is arranged in order in the form of data frames. To simplify the process of sending media data packets and support audio and video synchronization, the streaming server 20 puts all the original data received from one media file into one media data packet. As shown in Table 1, the streaming server 20 obtains a video frame and an audio frame of a media file according to the coding format of the media file. The video frame includes a video key frame (I frame) and a video predicted frame (P frame or B frame). The I frame stores complete video data corresponding to a video picture, and the P frame or B frame is used for adjusting the corresponding I frame, so that a new video picture may be acquired. For example, the video data stored in a first I frame corresponds to picture A, and subsequent picture B and picture C do not change much compared with picture A, so there is no need to store complete video data of picture B and picture C in the corresponding video frames (P frame or B frame), but only to store corresponding predicted information. When the P frame or B frame is played, picture B and picture C can be generated by adjusting the video data stored in the first I frame. As shown in Table 1, in a same media data packet, the I frame, P frame, B frame and audio frame are arranged in order.

Different from the conventional art, in this embodiment, the streaming server 20 performs RTP pre-encapsulation to the I frame, P frame, B frame and audio frame, that is, while obtaining various data frames, the streaming server 20 encapsulates the data frames into different RTP packets. As shown in Table 2, each I frame, P frame, B frame and audio frame are divided into one or more RTP packets. Herein, VI1R1 indicates the first RTP packet of the first I frame, and VI1R2 indicates the second RTP packet of the first I frame; A1R1 indicates the first RTP packet of the first audio frame, and A1R2 indicates the second RTP packet of the first audio frame; VP1R1 indicates the first RTP packet of the first P frame; VB1R1 indicates the first RTP packet of the first B frame; VI2R1 indicates the first RTP packet of the second I frame, and so on.

**Table 1**

| | | | | | | |
|---|---|---|---|---|---|---|
| First I frame | First audio frame | First P frame | First B frame | ... | Second I frame | ... |

**Table 2**

| | | | | | | | | |
|---|---|---|---|---|---|---|---|---|
| VI1R1 | VI1R2 | A1R1 | A1R2 | VP1R1 | VB1R1 | ... | VI2R1... | ... |

As shown in Table 3, each RTP packet includes three data parts: an rtsp header which includes real-time streaming protocol header information, an rtp header which includes real-time transport protocol header information and a sample which includes media data. The rtsp header contains four bytes, where the first byte is RTP data, the second byte is a port number, and the third byte and the fourth byte are the length of the RTP packet; the rtp header is the header information of the RTP packet; and the sample is video data or audio data for sampling.

**Table 3**

| | | |
|---|---|---|
| rtsp header | rtp header | sample |

Because the streaming server 20 performs RTP pre-encapsulation to the media data information (including the I frame, B frame, P frame and audio frame) of the media files after receiving the media files, the streaming server 20 may directly send the corresponding RTP packets to the client after receiving an operational command from the client. This is different from the conventional art in which the streaming server performs RTP encapsulation to the media data information only after receiving an operational command from the client and then sends the media data information to the client. Moreover, in the conventional art, the streaming server needs to perform repetitive RTP encapsulation to the streaming media data information each time the streaming server receives a same operational command. Thus the method provided by the embodiment of the present invention reduces the amount of information processed by the streaming server 20 to some extent, shortens the information processing time when the streaming server 20 provides the streaming media service, and enhances the user experience.

In this embodiment, the index information includes description information of each I frame. The description information contains the start position of the current I frame, the data size of the current I frame, and the data size from the current I frame to the next I frame, sampling time and time identifier. The streaming server 20 stores the index parameters to the fields corresponding to an index table. By the index table, the streaming server 20 can quickly locate each I frame, so as to process the media data information such as playing, locating, fast forwarding, and rewinding. As shown in Table 4, in an index table, file-offset indicates the start position of the current I frame in the media data information; size indicates the data size from the current I frame to the next I frame; iframesize indicates the data size of the current I frame; time indicates the absolute time in the media data information, used for time control; and ts is a time identifier.

**Table 4**

| | | | | |
|---|---|---|---|---|
| file-offset | Size | iframesize | Time | ts |

With reference to Table 1, all the P frames and B frames between the first I frame and the second I frame are used for adjusting the first I frame. All the audio frames between the first I frame and the second I frame match corresponding video frames (including I frame, P frame and B frame) according to respective time identifiers. When the time identifier in an audio frame is the same as that in a video frame, the audio frame and the video frame shall be played at the same time.

Hereunder a media file whose coding format is MPEG-4 and suffix is ".mp4" and a media file whose coding format is MPEG-2 and suffix is ".ts" are taken as examples for a more detailed description. As shown in Figure 3, the streaming server 20 converts the media files whose coding formats are MPEG-4 and MPEG-2 respectively into the media files of a particular file format. The detailed converting process is as follows.

Step 300: After receiving the media files whose suffixes are ".mp4" and ".ts" respectively, the streaming server 20 determines that the coding formats of the media files are MPEG-4 and MPEG-2 respectively according to the file header information in the source files of the media files.

As shown in Table 5, the media file whose suffix is ".mp4" includes multiple atoms, each atom containing three parts: size, type and data.

**Table 5**

| | | |
|---|---|---|
| size | type | data |

**Table 6**

| |
|---|
| Sample description atom |
| Time-to-sample atom |
| Time-to-sample atom |
| ... ... |

In addition, the media file whose suffix is ".mp4" also contains a sample table atom. As shown in Table 6, the sample table atom contains many parameters used for indexing, such as a sample description atom which contains description information of each sample point, a time-to-sample atom which contains time information corresponding to each sample point and a sync sample atom which contains the sequence number of each sample point that has the data of a video key frame.

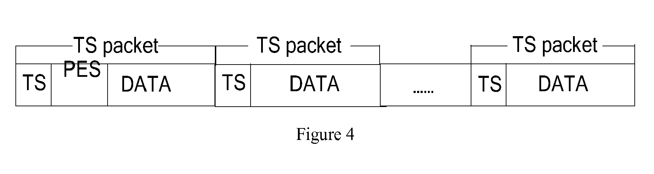

The media file whose suffix is ".ts" includes multiple TS packets. These TS packets are generated by dividing multiple PES packets. As shown in Figure 4, the first TS packet encapsulated by each PES packet includes three parts: a TS header, a PES header and DATA, while the other TS packets include two parts: a TS header and DATA. The TS header is used for identifying information such as a sending priority, the PES header includes index parameters such as time identifier, and the DATA is used for storing corresponding media data.

Step 310: The streaming server 20 extracts the media data whose coding format is MPEG-4 from the data part of each atom of the media file that has the suffix ".mp4", extracts the DATA part whose coding format is MPEG-2 from the media file that has the suffix ".ts", and respectively composes the media data packets shown in Table 1. The media data packet includes the video frame and the audio frame of the media file.

Step 320: The streaming server 20 performs RTP pre-encapsulation to the video frame and the audio frame. As shown in Table 2, the video frame and the audio frame are respectively divided to one or more RTP packets by the streaming server 20.

Step 330: The streaming server 20 generates the index information as shown in Table 4 according to the index parameters in the sample table atom of the media file whose suffix is ".mp4" and coding format is MPEG-4, and the index parameters in the PES header of the media file whose suffix is ".ts" and coding format is MPEG-2. The generated index information is used for fast locating of the I frame in the video frame.

According to the above embodiment, after the streaming server 20 converts the media files of various coding formats into the media files of a particular file format, and when the client 21 requests to play a section of a media file, the streaming server 20 reads the index information of the corresponding I frame in the index table, determines the start position of the I frame in the media data information, reads valid media data starting from the start position, and sends the corresponding video key frame, video predicted frame and audio frame to the client 21.

For example, when a user logs in to the streaming server 20 through the client 21, and demands scene B of movie A by a locating command, the streaming server 20 obtains the absolute time C of the I frame that corresponds to the scene B by time calculation, finds the record whose "time" field is equal to C in the index table, obtains the start position D of the I frame in the movie A, reads the I frame and all the subsequent I frames, P frames, B frames and corresponding audio frames starting from the start position D, and sends corresponding RTP packets to the client 21.

Besides, the user may also fast forward or rewind the movie A by sending a fast forwarding or rewinding command through the client 21. According to the fast forwarding or rewinding speed, the fast forwarding and rewinding operations are classified into multiple levels such as 1X, 2X, and 4X. When the user fast forwards or rewinds the movie A from the scene B by 1X, the streaming server 20 obtains the start position D of the I frame corresponding to the scene B, reads the I frame starting from the start position D, and reads all the subsequent I frames in a forward or reverse direction, without reading P frames, B frames or audio frames. When the user fast forwards or rewinds the movie A from the scene B by 2X or 4X, the streaming server 20 obtains the start position D of the I frame corresponding to the scene B, reads the I frame starting from the start position D, and reads the corresponding I frames in a forward or reverse direction at intervals of one I frame or multiple I frames. In the process of fast forwarding or rewinding, the streaming server 20 determines the size of the I frame to be read each time according to the "iframesize" field in the index table.

According to the method provided by the embodiments of the present invention, one streaming server 20 can process media files of different coding formats, and thus in the streaming media service system, a small quantity of streaming servers 20 may provide system services with abundant contents for the user, which reduces the cost of the system and the integration difficulty of the system to some extent, and realizes load balance of the system.

It is apparent that those skilled in the art can make various modifications and variations to the present invention without departing from the spirit and scope of the present invention. The present invention is intended to cover these modifications and variations provided that they fall in the scope of protection defined by the following claims or their equivalents.

## Claims

1. A method for supporting media data of various coding formats, comprising:
by a streaming server, converting received media files of different coding formats into media files of a particular file format, wherein the media files of the particular file format include media data information and index information; and
by the streaming server, determining a corresponding media file according to an operational command from a client, and sending corresponding media data information in the corresponding media file to the client according to the index information in the corresponding media file.

2. The method of claim 1, wherein the converting media files of different coding formats into media files of a particular file format comprises:
parsing each media file and determining a corresponding coding format of the media file according to a source file of the media file;
obtaining a video frame, an audio frame and index parameters of the media file according to the coding format of the media file;
generating corresponding media data information according to the video frame and audio frame, wherein the video frame comprises a video key frame and a video predicted frame; and generating index information for locating the video key frame in the video frame according to the corresponding index parameters.

3. The method of claim 2, wherein the generating corresponding media data information according to the video frame and audio frame comprises: obtaining media data information containing at least one real-time transport protocol data packet by dividing the video key frame, video predicted frame and audio frame according to a real-time transport protocol, wherein the real-time transport protocol data packet comprises real-time streaming protocol header information, real-time transport protocol header information and media data.

4. The method of claim 2, wherein the index information comprises a start position of the video key frame, data size of the video key frame, data size from the video key frame to a next video key frame, sampling time and time identifier.

5. The method of claim 4, wherein the step of locating the video key frame according to the index information comprises: determining the corresponding audio frame according to the time identifier in the index information and a time identifier contained in the audio frame, and determining the video key frame in the corresponding video frame according to the time identifier in the corresponding audio frame.

6. The method of any of claims 1 to 5, wherein the operational command is a playing command, a locating command, a fast forwarding command or a rewinding command.

7. The method of claim 6, further comprising: after receiving the playing command or locating command, determining the video key frame in the corresponding video frame according to the index information, setting the start position of the video key frame in the corresponding media file, and reading the video key frame and subsequent video key frames, video prediction frames and audio frames starting from the start position.

8. The method of claim 6, further comprising: after receiving the fast forwarding command or rewinding command, the video key frame in the corresponding video frame according to the index information, setting the start position of the video key frame in the corresponding media file, reading the video key frame starting from the start position, and reading only subsequent video key frames in a forward direction or in a reverse direction, consecutively or at intervals of one or more video key frames.

9. A streaming server, comprising:
a receiving unit, adapted to receive an operational command from a client (21) media files of different coding formats ;
a converting unit, adapted to convert the media files of different coding formats into media files of a particular file format, wherein the media files of a particular file format comprise media data information and index information;
a storing unit, adapted to store the media files of a particular file format;
a processing unit, adapted to determine a corresponding media file according to the operational command from the client, determine a corresponding video key frame according to index information in the corresponding media file, set the start position of the video key frame in the corresponding media file, and read the media data information starting from the start position; and
a sending unit, adapted to return the corresponding media data information to the client.

10. The streaming server of claim 9, wherein the converting unit is further adapted to obtain media data information containing at least one real-time transport protocol data packet by dividing the video key frame, video prediction frame and audio frame according to a real-time transport protocol.

11. A communication system, comprising:
a client, adapted to send an operational command to a streaming server, and receive media data information returned from the streaming server; and
the streaming server, adapted to convert received media files of different coding formats into media files of a particular file format, wherein the media files of a particular file format include media data information and index information, determine a corresponding media file according to the operational command from the client, determine and send corresponding media data information in the corresponding media file to the client according to index information in the corresponding media file.

12. The communication system of claim 11, wherein the streaming server comprises:
a receiving unit, adapted to receive media files of different coding formats and an operational command from a client;
a converting unit, adapted to convert the media files of different coding formats into media files of a particular file format pre-encapsulated with a real-time transport protocol, wherein the media files of a particular file format comprise media data information and index information;
a storing unit, adapted to store the media files of a particular file format;
a processing unit, adapted to determine a corresponding media file according to the operational command from the client, determine a corresponding video key frame according to index information in the corresponding media file, set the start position of the video key frame in the corresponding media file, and read the media data information from the start position; and
a sending unit, adapted to return the corresponding media data information to the client.
